Europäisches Patentamt

European Patent Office

Office européen des brevets

(19)

(11) Veröffentlichungsnummer: **0 1 1 4 285**
**B1**

(12) **EUROPÄISCHE PATENTSCHRIFT**

(45) Veröffentlichungstag der Patentschrift:
**06.08.86**

(21) Anmeldenummer: **83112407.8**

(22) Anmeldetag: **09.12.83**

(51) Int. Cl.⁴: **B 60 L 7/22,** H 02 P 7/28

(54) **Entregungsschaltung für Fahrzeugmotoren mit Nutzbremse und Verfahren zur Schnellentregung und zum schnellen Übergang auf Normalbetrieb.**

(30) Priorität: **24.01.83 CH 377/83**

(43) Veröffentlichungstag der Anmeldung:
**01.08.84 Patentblatt 84/31**

(45) Bekanntmachung des Hinweises auf die Patenterteilung:
**06.08.86 Patentblatt 86/32**

(84) Benannte Vertragsstaaten:
**CH DE FR LI SE**

(56) Entgegenhaltungen:
**DE - A - 2 000 908**

**ELEKTRISCHE BAHNEN, Band 49, Nr. 10, Oktober 1978, Seiten 250-257, München, DE. G. DEPPISCH: "Die elektrische Ausrüstung der ersten Wechselstrom-Serienlokomotive Baureihe 7E für die Südafrikanischen Eisenbahnen"**
**ELEKTRISCHE BAHNEN, Band 40, Nr. 11, November 1969, Seiten 255-257, München, DE. U. VOS: "Schaltung und Steuerung des Triebzuges Baureihe 420 der Deutschen Bundesbahn"**

(73) Patentinhaber: **BBC Aktiengesellschaft Brown, Boveri & Cie., Haselstrasse, CH-5401 Baden (CH)**

(72) Erfinder: **Ernst, Dieter, Dipl.-Ing., Austr. 10, CH-8951 Fahrweid (CH)**
Erfinder: **Good, Paul, Dipl.-Ing., Kirchweg 10 Büel, CH-8887 Mels (CH)**
Erfinder: **Rüegg, Rudolf, Dipl.-Ing., Bodenacherstrasse 83, CH-8121 Benglen (CH)**

**Beschreibung**

Bei der vorliegenden Erfindung wird ausgegangen von einer Entregungsschaltung für aus einem Wechselspannungsnetz über einen netzgeführten Stromrichter gespeiste Gleichstrom-Fahrzeugmotore mit einer Serienfeldwicklung und einer Fremderregerfeldwicklung, die eine Rückspeisung elektrischer Energie ins Stromnetz beim Bremsen des Fahrzeugs ermöglicht, nach dem Oberbegriff des Patentanspruchs 1. Die Erfindung bezieht sich ebenso auf ein Verfahren zur Schnellentregung von Fahrzeugmotoren und zur schnellen Wiederaufnahme des Normalbetriebs — Bremsbetrieb oder Fahrbetrieb — nach einem Wechselrichterkippen.

Mit diesem Oberbegriff nimmt die Erfindung auf einen Stand der Technik von Entregungsschaltungen für Gleichstrom-Fahrzeugmotore mit Nutzbremse Bezug, wie er aus der DE-A 2 000 908 bekannt ist. Dort wird zur Begrenzung eines unerwünschten Kurzschlussstromes im Gleichstromkreis eines Fahrzeugmotors infolge kurzzeitiger Stromunterbrechungen, z.B. durch Springen des Stromabnehmers am Fahrdraht, welche ein Kippen der gesteuerten Ventile der Wechselrichter zur Folge haben können, eine gemischte Fahrmotor-Erregung angewendet, welche einen Serie-Feldanteil und einen Fremdfeldanteil aufweist. Der Serie-Feldanteil wird im Bremsbetrieb in Gegenkompoundschaltung wirksam und begrenzt einen allfälligen Kurzschlussstrom. Im Störfall wird im Fremdfeldstromkreis ein ohmscher Widerstand mit einer Drossel in Reihe geschaltet, wodurch die Kurzschlussstromspitze reduziert wird. Durch die Gegenkompoundierung wird der Fahrzeugmotor stark feldgeschwächt und damit seine elektrische Bremskraft verringert.

Die Erfindung, wie sie in den Patentansprüchen 1 und 4 definiert ist, löst die Aufgabe, die Dauer für die Entregung des Motors bei einer Nutzbremsung zu verkürzen und im Störfall bzw. nach einem Stromrichterkippen schneller auf Normalbetrieb — Bremsbetrieb oder Fahrbetrieb — überzugehen (Anspruch 6).

Ein Vorteil der Erfindung besteht darin, dass eine grössere Bremskraft des Motors erzielt werden kann. Statt jedem einzelnen Motor bzw. Motorzweig dafür ein steuerbares Ventil zuzuordnen, wird lediglich eine Brückenhälfte einer Stromrichterstufe doppelt ausgeführt und sowohl eine Bremssammelschiene als auch eine Fahrsammelschiene vorgesehen. Dies ergibt einen Platz-, Gewichts- und Preisvorteil besonders dann, wenn mehr als zwei Motore parallelgeschaltet sind, was z.B. bei elektrischen Triebfahrzeugen vorkommt. Im Bremsfall ermöglicht diese Massnahme eine Schnellentregung des Motors durch Zünden der Ventile die mit der Fahrsammelschiene verbunden sind. Zusätzlich wird durch diese Massnahme, nach der zwischen diesen beiden Schienen ein Potential erzeugt werden kann, durch das die Abnahme des Stromes durch die Serienfeldwicklung beschleunigt wird, ein schneller Übergang auf Normalbetrieb ermöglicht.

Zum einschlägigen Stand der Technik wird zusätzlich auf Brown Boveri Mitteilungen 12 (1975) S. 554 bis 557 verwiesen. Dort ist eine Nutzbremsschaltung für einen gemischterregten Fahrzeugmotor in Gegenkompoundschaltung mit einer Entregungseinrichtung angegeben. Im Fahrbetrieb wird die Serienerregung durch eine Fremderregung unterstützt. Beim Übergang vom Fahrbetrieb in den Bremsbetrieb wird das Fremdfeld durch Schütze umgepolt, so dass die induzierte Spannung am Motor ihre Polarität umkehrt und der Fahrzeugmotor gegenkompoundiert arbeitet. Die Entregungseinrichtung ist in den Fremderregerkreis geschaltet. Sie besteht im wesentlichen aus einem Entregungswiderstand und einem dazu parallelgeschalteten zwangsgelöschten Thyristorschalter. Durch die Gegenkompoundierung ist der Motor stark feldgeschwächt und damit seine elektrische Bremskraft verringert.

Eine Einrichtung zur statischen Umschaltung eines Motors auf Fahrbetrieb, Widerstands- und Nutzbremsen ist ferner in der DE-PS 2 754 349 angegeben. Dort ist nur eine Erregerfeldwicklung vorgesehen, die einem Bremswiderstand, einem Thyristor und der Läuferwicklung des Motors parallelgeschaltet ist. In jedem der 4 Parallelzweige sind Thyristoren zur Steuerung der Ströme vorhanden, was relativ teuer ist. Fahrzeugmotoren mit zwei Erregerwicklungen ermöglichen demgegenüber auf einfache Weise eine Schnellentregung im Nutzbremsbetrieb.

Die Erfindung wird nachstehend anhand eines Ausführungsbeispiels näher erläutert.

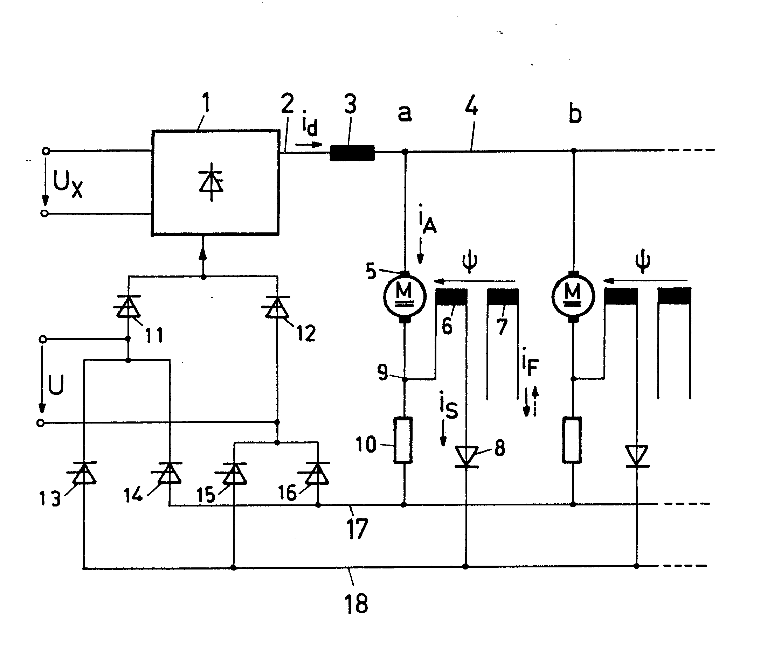

Die einzige Figur zeigt eine Entregungsschaltung mit Anschnittsteuerung und elektrischer Nutzbremseinrichtung für zwei parallelgeschaltete Gleichstrommotore.

Ein n-stufiger Stromrichter 1 wird eingangsseitig von einer Wechselspannung $U_x$ gespeist. Mit seinem positiven Spannungsausgang ist er über eine Ausgangsleitung 2, in der im Betriebszustand ein Gesamtgleichstrom $i_d$ fliesst, und eine Glättungsdrosselspule 3 mit einer positiven Sammelschiene 4 verbunden. An diese Sammelschiene 4 sind zwei Motoreneinheiten a und b angeschlossen, die den gleichen Aufbau aufweisen. Es können mehrere solcher Motoreneinheiten angeschlossen werden.

Jede Motoreneinheit a, b weist einen Fahrzeugmotor M mit einer Ankerwicklung 5, einer Serienfeldwicklung 6 und einer Fremdfeldwicklung 7 sowie eine Motorentkopplungsdiode 8 und einen Bremswiderstand 10 auf. Die Ankerwicklung 5, durch die im Betriebszustand ein Ankerstrom $i_A$ fliesst, ist einerseits an die positive Sammelschiene 4 und andererseits über den zu ihr in Reihe geschalteten Bremswiderstand 10 an eine Bremssammelschiene 17 angeschlossen. Die Serienfeldwicklung 6 ist einerseits an einen bremswiderstandsseitigen Anschlusspunkt 9 der Ankerwicklung 5 und andererseits über die Motorentkupplungsdiode 8 an eine Gegenkompound- und Fahrsammelschiene 18, nachfolgend kurz Fahrsammelschiene genannt, angeschlossen. Die Fremdfeldwicklung 7 ist an einen nicht dargestellten Erregerstromrichter angeschlossen. Eine weitere Stromrichterstufe mit einer positiven Brückenhälfte mit den Thyristoren 11 und 12 und mit einer negativen Brückenhälfte mit den Thyristoren 13 bis 16 ist eingangsseitig von einer Wechselspannung U gespeist. Der positive Spannungsausgang der positiven Brückenhälfte dieser Stromrichterstufe ist mit einem negativen Spannungsausgang des n-stufigen Stromrichters 1 verbunden. Die negative Brückenhälfte ist doppelt ausgeführt. Dabei werden jeweils zwei Thyristorzweige wechselstromseitig an einen gemeinsamen Knotenpunkt und gleichstromseitig getrennt an die Brems- bzw. Fahrsammelschienen 17 bzw. 18 angeschlossen. Die an die Bremssammelschiene 17 angeschlossenen Thyristoren 14 und 16 werden nachfolgend als Bremsthyristoren, die an die Fahrsammelschiene angeschlossenen Thyristoren 13 und 15 als Fahr-/Entregungsthyristoren bezeichnet.

Die Wechselspannungen für die Eingänge der Stromrichter können auf übliche Weise der Sekundärseite eines nichtdargestellten Haupttransformators entnommen sein.

Nachfolgend soll die Wirkung dargelegt werden, die mit der oben beschriebenen Schaltung erreicht werden kann.

Im ungestörten, bremsfreien Fahrbetrieb verteilt sich der vom positiven Spannungsausgang des n-stufigen Stromrichters 1 kommende Gesamtgleichstrom $i_d$ auf die einzelnen Motoreinheiten a, b... Durch die Ankerwicklung 5 des Fahrzeugmotors M und die Serienfeldwicklung 6 fliesst derselbe Ankerstrom $i_A$. Die Motorentkopplungsdiode 8, die beim Bremsen störende Rückwirkungen zwischen den Fahrzeugmotoren verhindern soll, ist leitend, die Fahr-/Entregungsthyristoren 13 und 15 werden entsprechend dem vom Fahrzeugmotor M geforderten Drehmoment gezündet und die Bremsthyristoren 14 und 16 bleiben gesperrt, so dass durch den Bremswiderstand 10 kein Strom fliessen kann. Durch die Femdfeldwicklung 7 des Fahrzeugmotors M fliesst in Richtung des ausgezogenen Pfeils der Fremdfeldstrom $i_F$ und erzeugt zusammen mit dem durch die Serienfeldwicklung fliessenden Serienfeldstrom $i_S$ ( $= i_A$) den Motorfluss $\psi$. Über den Ankerstrom $i_A$ und den Motorfluss $\psi$ kann das Drehmoment des Fahrzeugmotors M gesteuert werden.

Im Bremsbetrieb arbeitet der Fahrzeugmotor M als Generator. Es werden die Bremsthyristoren 14 und 16 gezündet, so dass der Ankerstrom $i_A$ durch den Bremswiderstand 10 fliesst. Der Serienfeldstrom $i_S$ verschwindet. Der Statorfluss $\psi$ für die Erzeugung der Bremskraft wird durch den Fremdfeldstrom $i_F$ aufgebracht, der jetzt in die andere, durch den gestrichelten Pfeil gekennzeichnete Richtung fliesst. Dabei wird in elektrische Energie umgewandelte Bremsenergie in das Stromnetz eingespeist.

Bei Stromabnehmersprüngen im Normalbetrieb — Bremsbetrieb — sowie bei starken Netzstörungen kann der Stromrichter aus dem Wechselrichter- in den Gleichrichterbetrieb kippen oder bei Netzausfall einen Kurzschluss der Motorspannung bewirken. Dies kann zu Überlastungen des Stromrichters und der Ankerwicklung führen, wenn der Fahrzeugmotor nicht sehr rasch entregt wird. Zur Schnellentregung werden bei Erfassen des Wechselrichterkippens der Fremdfeldstrom $i_F$ durch Zwangslöschung abgeschaltet und zusätzlich die Fahr-/Entregungsthyristoren 13, 15 gezündet. Das durch die Serienfeldwicklung 6 erzeugte Feld wirkt nun dem Fremdfeld entgegen und verringert den Motorfluss $\psi$.

Ist der Stromrichter gekippt und die Gegenkompoundierung durch Zünden der Fahr-/Entregungsthyristoren eingeleitet und die Netzspannung wieder vorhanden, so kann, zwecks einer raschen Wiederherstellung des normalen Betriebes, wie folgt vorgegangen werden:

— die Motorspannung wird (z.B. über die Fremderregung) so gesteuert, dass ein Überstrom verhindert werden kann;
— der n-stufige Stromrichter darf dabei beliebig ausgesteuert werden;
— die Thyristorzweige 13 bis 16 werden so ausgesteuert, dass eine Spannung zwischen Brems- und Fahrsammelschiene 17 und 18 entsteht, die einen schnelleren Stromabbau in der Fahrsammelschiene 18 selbst bewirkt;
— ist der Strom in der Fahrsammelschiene auf Null abgesunken, so kehrt man zum Normalbetrieb zurück.

Dieses Steuerprogramm hat den Vorteil, dass mindestens die Hälfte der Bremskraft sofort wiederhergestellt ist und die volle Bremskraft relativ schnell wiederhergestellt werden kann. Mit der Aufnahme des Normalbetriebes muss also nicht gewartet werden, bis der Ankerstrom $i_A$ verschwunden ist. Es können bereits vorher eine oder weitere Stromrichterstufen des netzgeführten Stromrichters so angesteuert und der Fremdfeldstrom $i_F$ so geführt werden, dass der gewünschte Gesamtstrom $i_d$ erzeugt werden kann.

**Patentansprüche**

1. Entregungsschaltung für aus einem Wechselspannungsnetz über einen netzgeführten Stromrichter (1, 11-16) gespeiste Gleichstrom-Fahrzeugmotore (5) mit einer Serienfeldwicklung (6) und einer Fremderregerfeldwicklung (7) und mit Ermöglichung einer Rückspeisung elektrischer Energie ins Stromnetz beim Bremsen des Fahrzeugs durch Umkehrung der Fremderregung, wobei die Serienfeldwicklung in Gegenkompoundrichtung zur Fremderregerfeldwicklung wirkt, dadurch gekennzeichnet, dass

— ein Anschlusspunkt (9) der Ankerwicklung (5) über einen Bremswiderstand (10) mit einer Bremssammelschiene (17) verbunden ist,
— dass der gleiche Anschlusspunkt (9) über die Serienfeldwicklung (6) an eine Fahrsammelschiene (18) geschaltet ist,
— dass die Bremssammelschiene über mindestens erste und zweite steuerbare Ventile (14, 16) an die Stromrichtereingangswechselspannung (U) und
— dass die Fahrsammelschiene (18) über mindestens dritte und vierte steuerbare Ventile (13, 15) an die Stromrichtereingangswechselspannung (U) angeschlossen ist.

2. Entregungsschaltung nach Anspruch 1, dadurch gekennzeichnet, dass die ersten und zweiten sowie die dritten und vierten steuerbaren Ventile eine doppelt ausgeführte Brückenhälfte einer Stromrichterstufe bilden, wobei jeweils zwei Thyristorzweige wechselstromseitig an einen gemeinsamen Knotenpunkt und gleichstromseitig getrennt an die Brems- und Fahrsammelschiene (17, 18) angeschlossen ist.

3. Entregungsschaltung nach Anspruch 2, dadurch gekennzeichnet, dass der netzgeführte Stromrichter durch gleichstromseitige Reihenschaltung von Stromrichtern mindestens zweistufig ist.

4. Verfahren zur Schnellentregung von Fahrzeugmotoren mit einer Entregungsschaltung nach einem der Ansprüche 1 bis 3, dadurch gekennzeichnet, dass im Falle des Aussertrittfallens des Wechselrichters bzw. eines Wechselrichterkippens zum Abbau eines Überstromes in der Ankerwicklung mindestens ein Teil des Stromes durch die Serienfeldwicklung (6) geschickt wird, so dass dadurch der durch das Fremdfeld erzeugte Motorfluss (ψ) vermindert wird.

5. Verfahren nach Anspruch 4, dadurch gekennzeichnet, dass der Strom durch die Serienfeldwicklung (6) durch Öffnen der von der Fahrsammelschiene (18) zu den Stromrichtereingangsklemmen führenden steuerbaren Ventile (13, 15) bewirkt wird.

6. Verfahren zur schnellen Wiederaufnahme eines Normalbetriebes — Bremsbetrieb oder Fahrbetrieb — von Fahrzeugmotoren mit einer Entregungsschaltung nach einem der Ansprüche 1 bis 3 nach einem Wechselrichterkippen, dadurch gekennzeichnet,

— dass zum Abbau eines Überstromes in der Ankerwicklung mindestens ein Teil dieses Stromes durch die Serienfeldwicklung (6) geschickt wird, so dass dadurch der durch das Fremdfeld erzeugte Motorfluss (ψ) vermindert wird, und

— dass vor einem Verschwinden dieses Stromes die steuerbaren Ventile (13-16) des Stromrichters so gesteuert werden, dass eine Spannung zwischen Bremssammelschiene (17) und Fahrsammelschiene (18) entsteht, die die Abnahme des Stromes durch Serienfeldwicklung (6) beschleunigt und

— dass weitere Stromrichterstufen (1) des netzgeführten Stromrichters (1, 11-16) so angesteuert und der Fremdfeldstrom ($i_F$) so geführt werden, dass der gewünschte Gesamtstrom ($i_d$) fliesst.

**Claims**

1. De-energizing circuit for direct-current vehicle motors (5) fed from an alternating-voltage system via a mains-commutated static converter (1, 11-16) and comprising a series field winding (6) and a separate-excitation field winding (7) and providing the possibility of feeding electric energy back into the power system during the braking of the vehicle by reversing the separate excitation, in which arrangement the series field winding acts in counter-compound direction to the separate-excitation field winding, characterised in that

— a connecting point (9) of the armature winding (5) is connected via a braking resistor (10) to a braking bus (17),

— that the same connecting point (9) is connected via the series field winding (6) to a driving bus (18),

— that the braking bus is connected via at least first and second controllable rectifiers (14, 16) to the alternating input voltage (U) of the static converter and

— that the driving bus (18) is connected via at least third and fourth controllable rectifiers (13, 15) to the alternating input voltage (U) of the static converter.

2. De-energizing circuit according to Claim 1, characterised in that the first and second and the third and fourth controllable rectifiers form a dual-construction bridge half of a static converter stage, two thyristor branches being in each case connected at the alternating-current side to a common junction and at the direct-current side separately to the braking and driving busses (17, 18).

3. De-energizing circuit according to Claim 2, characterised in that the mains-commutated static converter has at least two stages due to the series connection of static converters at the direct-current side.

4. Method for rapidly de-energizing vehicle motors, comprising a de-energizing circuit according to one of Claims 1 to 3, characterised in that in the case of the loss of synchronisation of the inverter or a commutation failure of the inverter at least a part of the current is sent through the series field winding (6) to remove an overcurrent in the armature winding, so that this reduces the motor flux (ψ) generated by the separate field.

5. Method according to claim 4, characterised in that the current through the series field winding (6) is produced by the opening of the controllable rectifiers (13, 15) leading from the driving bus (18) to the static converter input terminals.

6. Method for the rapid resumption of normal operation
— braking operation or driving operation — of vehicle motors comprising a de-energizing circuit according to one of Claims 1 to 3 after an inverter commutation failure, characterised in that
— for removing an overcurrent in the armature winding, at least a part of this current is sent through the series field winding (6) so that this reduces the motor flux (ψ) caused by the separate field, and
— that, before this current disappears, the controllable rectifiers (13-16) of the static converter are controlled in such a manner that a voltage is produced between the braking bus (17) and driving bus (18) which accelerates the reduction of the current through the series field winding (6), and
— that further static converter stages (1) of the mains-commutated static converter (1, 11-16) are driven in such a manner and the separate field current ($i_F$) is commutated in such a manner that the desired total current ($i_d$) flows.

**Revendications**

1. Circuit de désexcitation pour des moteurs de véhicules à courant continu (5) alimentés par un secteur alternatif par l'intermédiaire d'un convertisseur de courant (1, 11-16) piloté par le secteur, comportant un enroulement de champ séries (6) et un enroulement de champ d'excitation extérieure (7) qui rend possible un retour d'énergie électrique dans le secteur lors du freinage du véhicule, par inversion de l'excitation extérieure, l'enroulement de champ série fonctionnant alors dans un sens d'anticompoundage par rapport à l'enroulement de champ d'excitation extérieure, caractérsé en ce que:

— un point de connexion (9) de l'enroulement d'induit (5) est connecté par l'intermédiaire d'une résistance de freinage (10) à une barre omnibus de freinage (17),

— le même point de connexion (9) est connecté par l'intermédiaire de l'enroulement de champ série (6) à une barre omnibus de marche (18),

— la barre omnibus de freinage est connecté par l'intermédiaire d'au moins une première et une deuxième valve pilotables (14, 16) à la tension alternative d'entrée du convertisseur de courant (U), et

— la barre omnibus de marche (18) est connectée par l'intermédiaire d'au moins une troisième et une quatrième valve pilotables (13, 15) à la tension alternative d'entrée du convertisseur de courant (U).

2. Circuit de désexcitation suivant la revendication 1, caractérisé en ce que la première et la deuxième valve pilotables, ainsi que la troisième et la quatrième valve pilotables forment une moitié de pont d'un étage de convertisseur de courant réalisée en double, deux branches à thyristor étant chaque fois connectées, du côté du courant alternatif, à un point de connexion commun et, du côté du courant continu, séparément aux barres omnibus de freinage et de marche (17, 18).

3. Circuit de désexcitation suivant la revendication 2, caractérisé en ce que le convertisseur de courant piloté par le secteur est au moins à deux étages par le montage en série de convertisseurs de courant du côté du courant continu.

4. Procédé pour la désexcitation rapide de moteurs de véhicules au moyen d'un circuit de désexcitation suivant l'une quelconque des revendications 1 à 3, caractérisé en ce que dans le cas d'un décrochage de l'onduleur ou d'un basculement de l'onduleur, en vue de diminuer une surintensité dans l'enroulement d'induit, au moins une fraction du courant est envoyée à travers l'enroulement de champ série (6), de sorte que le flux de moteur ($\psi$) produit par le champ extérieur est de ce fait diminué.

5. Procédé suivant la revendication 4, caractérisé en ce que le courant passant par l'enroulement de champ série (6) est engendré par l'ouverture des valves (13, 15) pilotables menant de la barre omnibus de marche (18) aux bornes d'entrée du convertisseur de courant.

6. Procédé pour rétablir rapidement un mode de fonctionnement normal — mode de freinage ou mode de marche — de moteurs de véhicules au moyen d'un circuit de désexcitation suivant l'une quelconque des revendications 1 à 3 après un décrochage d'onduleur, caractérisé en ce que:

— pour réduire une surintensité dans l'enroulement d'induit, au moins une fraction de ce courant est envoyée à travers l'enroulement de champ série (6), de sorte que le flux de moteur ($\psi$) produit par le champ extérieur est de ce fait réduit, et

— avant une disparition de ce courant, les valves pilotables (13, 16) du convertisseur de courant sont commandées d'une manière telle qu'une tension apparaisse entre la barre omnibus de freinage (17) et la barre omnibus de marche (18) et accélère la diminution du courant passant par l'enroulement de champ série (6), et

— d'autres étages de convertisseur de courant (17) du convertisseur de courant piloté par le secteur (1, 11-16) sont activés et le courant de champ extérieur ($i_F$) piloté d'une manière telle que le courant global ($i_d$) souhaité passe.